# EUROPÄISCHE PATENTSCHRIFT

(11) **EP 3 069 834 B1**
(45) Veröffentlichungstag und Bekanntmachung des Hinweises auf die Patenterteilung: **13.12.2017**
(21) Anmeldenummer: 16158869.4
(22) Anmeldetag: 07.03.2016
(51) Int. Cl.: B26D 1/28, B26D 7/06, B26D 1/00, A22C 7/00, A22C 11/00

(54) **TRENNVORRICHTUNG ZUM TRENNEN EINES STRANGES AUS PASTÖSER LEBENSMITTEL-MASSE**
SEPARATING DEVICE FOR SEPARATING A STRAND MADE OF A PASTY FOODSTUFF
DISPOSITIF DE SÉPARATION D'UN TRONÇON D'UNE MASSE ALIMENTAIRE PÂTEUSE

(30) Priorität: 19.03.2015 DE 102015104155
(43) Veröffentlichungstag der Anmeldung: 21.09.2016
(73) Patentinhaber: VEMAG Maschinenbau GmbH, 27283 Verden/Aller (DE)
(72) Erfinder: ZEIDLER, Ruben, 27283 Verden (DE); PANKOKE, Uwe, 27336 Rethem (DE); FLAMMANN, Uwe, 27308 Kirchlinteln (DE)
(74) Vertreter: Eisenführ Speiser

(56) Entgegenhaltungen:
- DE-A1- 19 739 788
- DE-U1- 29 714 754
- FR-A1- 2 565 883

## Beschreibung

Die Erfindung bezieht sich auf eine Trennvorrichtung zum Trennen eines Stranges aus pastöser Lebensmittel-Masse, insbesondere aus Fleisch oder Teigen, in einzelne Portionen gemäss dem Oberbegriff des Patentanspruchs 1, der seine Grundlage in der DE 197 39 788 hat. Es sind Trennvorrichtungen im Stand der Technik bekannt, welche zum Trennen beziehungsweise Unterteilen eines Stranges aus beispielsweise Fleisch oder Teigen in einzelne Portionen eingesetzt werden. Die aus insbesondere pastösen Lebensmittel-Massen bestehenden Portionen werden üblicherweise unmittelbar nach dem Trennen für eine nachfolgende Weiterverarbeitung oder zu deren direkter Verpackung mit Hilfe von nachgeschalteten Fördereinrichtungen abgeführt.

Solche bekannten Trennvorrichtungen von zum Beispiel einem Endlos-Strang aus pastöser Lebensmittel-Masse weisen ein bewegbares und antreibbares Trennmesser mit einer Schneide auf und mindestens eine dem Trennmesser zugeordnete Gegenschneide, mittels der die zu trennenden Lebensmittel-Massen von unten gestützt und gegen die das angetriebene Trennmesser bewegt werden. Dadurch wird das Trennen beziehungsweise Abteilen der einzelnen Portionen von dem vorzugsweise kontinuierlich erzeugten Endlos-Strang aus der Lebensmittel-Masse erleichtert. Die verwendeten Trennmesser haben üblicherweise ein langgestrecktes Messerblatt mit einer geraden Schneidkante oder ein, bezogen auf die Bewegungsrichtung des Trennmessers, gekrümmtes Messerblatt mit einer in Längsrichtung des Messersblatts konvex geformten Schneidkante.

Zum Trennen beziehungsweise Unterteilen eines Stranges aus pastöser Lebensmittel-Masse in einzelne Portionen werden die aus dem Stand der Technik bekannten Trennmesser mit ihrem geraden oder konvex geformten Messerblatt auf einer Kreisbahn um eine Drehachse herum bewegt. Das rotierende Messerblatt ist dabei häufig im Wesentlichen senkrecht zu dem Strang aus pastöser Lebensmittel-Masse ausgerichtet. Beim Erzeugen der einzelnen Lebensmittel-Portionen treten während des Trennvorganges mit den bekannten Trennmessern oft Schwierigkeiten beim Trennen des Stranges in einzelne Portionen auf.

Bei Trennmessern mit geradem Messerblatt, welche eine im Wesentlichen gerade Schneidkante haben, ist die Schneidwirkung an der zu unterteilenden Masse relativ gering. Damit kommt es mit solch geraden Trennmessern nach längerem Gebrauch mitunter zu unsauberen Schnitten, da sich häufig Rückstände der zu unterteilenden Lebensmittel-Masse an der Schneidkante des Messerblattes absetzen. Trennmesser mit konvex geformten Schneidkanten haben eine deutlich verbesserte Schneidwirkung, weil Rückstände an dem Messerblatt vermieden werden. Jedoch tritt das Trennmesser mit konvex geformter Schneidkante beim Trennen seitlich aus dem zu teilenden Strang aus, wodurch das Produkt an der Seite, wo das Trennmesser austritt, auseinandergerissen wird. Um dies zu vermeiden, werden seitliche Führungen für den zu unterteilenden Strang benötigt. Das Ausrichten der Führungen ist relativ einstellintensiv. Zudem müssen die Führungen nach einem gewissen Zeitraum wiederholt von Ablagerungen der vorbeigeführten Lebensmittel-Masse befreit werden.

Der Erfindung liegt daher die Aufgabe zugrunde, eine Trennvorrichtung zum Trennen eines Stranges aufzuzeigen, mithilfe der die oben angeführten Nachteile vermieden und zudem ein vereinfachtes Trennen möglich sind.

Die Erfindung löst die ihr zugrunde liegende Aufgabe mit einer Vorrichtung gemäss Anspruch 1. Der Erfindung liegt die Erkenntnis zugrunde, dass sich mit einer Schneide an einem Trennmesser, das eine Schneidkante aufweist, welche in Längsrichtung der Schneide, also entlang des zum Trennen des Stranges verwendeten Messerblattes, zumindest abschnittsweise konkav gekrümmt ist, eine verbesserte Schneidwirkung an dem zu unterteilenden Strang aus einer Lebensmittel-Masse erzielt wird. Im Vergleich zu einem Trennmesser mit einer geraden Schneidkante weist ein Trennmesser mit einer wenigstens abschnittsweise konkav gekrümmten Schneidkante über einen Abschnitt entlang des zum Schneiden verwendeten Messerblattes des Trennmessers einen steileren Schneidwinkel auf, was das Trennen der Masse vereinfacht. Im Gegensatz zu einem konvex geformten Trennmesser ist durch die erfindungsgemäße konkav geformte Schneidkante bewirkt, dass die Schneide während des Trennens bevorzugt an beiden Seitenflächen in den Strang eintritt, anstatt an einer Seitenfläche einzutreten und an der anderen Seitenfläche auszutreten. Damit ist das Aufreißen beziehungsweise Auseinanderreißen von Bereichen eines erzeugten Endlos-Stranges aus pastöser Lebensmittel-Masse vermieden. Daher kann auf den Einsatz zusätzlicher, seitlicher Führungen für den Strang verzichtet werden. Neben einem verbesserten Trennvorgang ist auch die konstruktive Ausgestaltung der erfindungsgemäßen Trennvorrichtung vereinfacht.

Nach einer bevorzugten Weiterbildung der erfindungsgemäßen Trennvorrichtung ist die Schneidkante des Trennmessers über nahezu ihre Gesamtlänge konkav gekrümmt. Bevorzugt weist das Messerblatt des Trennmessers eine an die Schneidkante angepasste Formgebung auf. Das Messerblatt ist somit ebenfalls gekrümmt ausgebildet und weist bevorzugt eine im Wesentlichen gleichmäßige Messerblatthöhe auf. Unter Messerblatthöhe ist vorliegend das Maß ausgehend von der Schneidkante in Richtung dem gegenüberliegend angeordneten Messerblatt-Rücken zu verstehen. Bevorzugt weist die Schneidkante eine konkave Krümmung mit einem im Wesentlichen gleichmäßigen Krümmungsradius oder -verlauf auf.

Gemäß einer alternativen Ausgestaltung der erfindungsgemäßen Trennvorrichtung weist die Schneidkante mindestens zwei konkav gekrümmte Schneidkantenabschnitte auf, welche durch einen im Wesentlichen geraden Schneidkantenabschnitt verbunden sind. Die konkav gekrümmten Schneidkantenabschnitte sind bevorzugt im Abstand zueinander entlang der Schneidkante angeordnet. Unter der abschnittsweisen Ausbildung konkav geformter Schneidkantenabschnitte ist vorliegend jedoch nicht die Ausbildung von einzelnen kleinen Zähnen an der Schneide zu verstehen. Bevorzugt weist ein erfindungsgemäßer konkav gekrümmter Schneidkantenabschnitt eine Länge auf, die mindestens einem Fünftel der Gesamtlänge der Schneide des zum Trennen verwendeten Messerblattes entspricht. Bevorzugt weist die Schneide des erfindungsgemäßen Trennmessers genau zwei konkav gekrümmte Schneidkantenabschnitte an vorzugsweise jeweils den Endbereichen der Schneide auf. Die beiden gekrümmten Schneidkantenabschnitte sind über einen im Wesentlichen geraden Schneidkantenabschnitt verbunden, der sich bevorzugt entlang des mittleren Drittels des Messerblattes erstreckt. Die Schneide weist ein, bezogen auf den Lagerpunkt des Trennmessers, proximales Ende und distales Ende und mindestens einen zwischen den Enden konkav gekrümmten Schneidkantenabschnitt auf und das Trennmesser ist so zur Gegenschneide gelagert und bewegbar, dass beide Enden der Schneide während des Trennvorgangs die Gegenschneide im Wesentlichen gleichzeitig passieren. Darüber ist bewirkt, dass beim Trennen des Stranges in einzelne Portionen insbesondere die Seitenflächen der Portion nicht mehr nach außen gedrückt werden. Aufgrund der konkaven Form der Schneidkante entstehen Schnittkräfte, welche die zu trennenden Bereiche in Richtung des Zentrums des Stranges bewegen. Damit wird eine saubere umlaufende Schnittkante an den abgeteilten beziehungsweise abgetrennten Portionen erzeugt. Einem seitlichen Verformen der abgetrennten Portionen ist damit entgegengewirkt. Bevorzugt gelangen das proximale und das distale Ende der Schneide gleichzeitig in Kontakt mit der bevorzugt feststehenden Gegenschneide der Trennvorrichtung. Der mittlere Abschnitt des Messerblattes ist dann im Abstand oberhalb der Gegenschneide angeordnet. In Abhängigkeit vom gewählten Krümmungsradius ist der mittlere Abschnitt mit einer ebenfalls konkav gekrümmten Schneidkante oder mit einer im Wesentlichen geraden Schneidkante noch nicht oder bereits im Kontakt mit der Lebensmittel-Masse aus beispielsweise Fleisch oder Teigen des zu unterteilenden Stranges.

Eine bevorzugte Weiterbildung der Erfindung sieht vor, dass das Trennmesser um eine Drehachse drehbar gelagert ist und die im Wesentlichen konkave Schneidkante des Trennmessers so geformt ist, dass während des Trennens sich zwei zwischen der Schneide und Gegenschneide ausbildende beabstandete Schneidbereiche aufeinander zu bewegen. Durch die erfindungsgemäße Ausgestaltung der Messerschneide, welche zumindest einen konkav gekrümmten Schneidkantenabschnitt aufweist, wird der zu unterteilende Strang jeweils von den Seitenflächen aus in Richtung der Mitte des Stranges geschnitten. Bevorzugt ist das Trennmesser um eine Drehachse gelagert, welche bevorzugt parallel zur Förderrichtung des Stranges aus der Lebensmittel-Masse ausgerichtet ist. Damit unterteilt das Trennmesser den bevorzugt kontinuierlich erzeugten beziehungsweise geformten Endlos-Strang aus der Lebensmittel-Masse quer zur Förderrichtung. Das drehbar gelagerte Trennmesser weist in seiner Schnittebene betrachtet ausgehend vom Lager- bzw. Drehpunkt in Richtung des distalen Endes der Schneide einen vorzugsweise geraden Verlauf des Messerblattes auf. Senkrecht zur Schnittebene betrachtet weist die Schneidkante und ebenfalls das Messerblatt des Trennmessers auf der Seite der Schneide des Messerblattes eine konkave Krümmung auf.

Gemäß einer anderen Weiterbildung der Erfindung sind zwei Gegenschneiden vorgesehen, welche im Abstand relativ zueinander verstellbar angeordnet und eingerichtet sind, einen Schneidspalt für das zwischen die Gegenschneiden hindurchführbare Trennmesser auszubilden. Mithilfe der im Abstand zueinander veränderbar angeordneten Gegenschneiden, zwischen denen das Trennmesser durch einen von den beiden Gegenschneiden ausgebildeten Schneidspalt hindurch geführt wird, ist während des Trennens ein Führen des Trennmessers in Schneidrichtung gewährleistet. Zudem wird die Schneidwirkung des Trennmessers verbessert, und es wird gleichzeitig verhindert, dass ein zu großer Anteil der zu unterteilenden Lebensmittel-Masse durch die Schnittbewegung mitgeführt wird. Die beiden Gegenschneiden bilden ein bevorzugt feststehendes Widerlager für den oberhalb der Gegenschneiden geführten Strang aus pastöser Masse aus.

Vorzugsweise weisen die den Schneidspalt begrenzenden Gegenschneiden einander zugewandte Schneidspalt-Flächen auf, welche in einem spitzen Winkel zueinander verlaufen, wobei der Schneidspalt sich in Bewegungsrichtung des Trennmessers erweitert. Mittels der in einem spitzen Winkel zueinander verlaufenden beziehungsweise geneigt zueinander ausgerichteten Schneidspalt-Flächen wird ein deutlich verringertes Mitführen von Teilen der getrennten Lebensmittel-Masse und eine zusätzliche Schneidwirkung, durch die bevorzugt aneinander entlang geführten Flächenbereiche von Messerblatt des Trennmessers und wenigstens einer der Gegenschneiden, erreicht. Die Gegenschneiden weisen ihren geringsten Abstand an den einander gegenüberstehenden Kanten der Gegenschneiden auf. Durch den sich in Schneidrichtung erweiternden Schneidspalt ist ein "Verstopfen" durch mitgeführte Lebensmittel-Masse und zudem eine verringerte Reibung mit dem zwischen die Gegenschneiden hindurchführbaren Trennmesser bewirkt, wodurch die Langzeitfunktion der Schneide des Trennmessers verbessert ist.

In einer anderen Weiterbildung der erfindungsgemäßen Trennvorrichtung weist der Schneidspalt zwischen den Gegenschneiden ein Übermaß zur Breite des Trennmessers im Bereich von 0 bis 0,5 mm auf. Mit dem geringen Übermaß von Schneidspalt zur Breite des Messerblatts des Trennmessers werden eine verbesserte Schneidwirkung und gleichzeitig eine erhöhte Selbstreinigung des Trennmessers beim Hindurchführen durch den engen Schneidspalt gewährleistet. Faserige oder sehnige Bestandteile der zu unterteilenden Lebensmittel-Masse werden aufgrund des geringen Übermaßes bevorzugt an den Gegenschneiden zumindest abgestreift und bestenfalls noch geschnitten. Zudem kann der Produktverlust, da durch das geringe Übermaß des Schneidspaltes nur wenig Masse durch den Spalt gedrückt werden kann, auf ein Minimum reduziert werden.

Bevorzugt weist die, bezogen auf die Förderrichtung des Stranges, vordere Gegenschneide eine im Wesentlichen ebene Gleitfläche für die Lebensmittel-Masse auf, welche vorzugsweise parallel oder schräg zu einer Horizontalen verläuft. Über die im Wesentlichen ebene Gleitfläche, welche bevorzugt parallel zu einer Horizontalen in Bezug auf die Umgebung ausgerichtet ist, wird der Strang aus pastöser Lebensmittel-Masse dem Trennmesser jeweils gerichtet zugeführt. Mit dem bevorzugt senkrecht zur Förderrichtung des Stranges und der Gleitebene der vorderen Gegenschneide geführten Trennmesser wird der Strang in einzelne Portionen mit vorzugsweise senkrecht zur Längsachse des Stranges verlaufenden Schnittflächen unterteilt. Die bevorzugt horizontal verlaufende Gleitfläche der vorderen Gegenschneide ist im Nahbereich einer der Trennvorrichtung vorschaltbaren Fördereinrichtung angeordnet, worüber eine einfache Übergabe des in Portionen zu unterteilenden Stranges von einer Fördereinrichtung an die Trennvorrichtung gewährleistet ist. Ein weiteres Ausführungsbeispiel der Erfindung sieht vor, dass das Trennmesser mit seinem Messerblatt so zur Schneidkante der vorderen Gegenschneide angeordnet beziehungsweise ausgerichtet ist, dass Messerblatt und Schneidkante direkt in Anlage miteinander stehen. Vorzugseise weist die Schneidkante der vorderen Gegenschneide zur in Förderrichtung gesehen vorderen Blattseite des Messerblattes des Trennmessers keinen Spalt beziehungsweise ein Spaltmaß gleich Null auf.

In einer anderen Weiterbildung der Erfindung weist die, bezogen auf die Förderrichtung des Stranges, hintere Gegenschneide eine im Wesentlichen ebene Gleitfläche für die Lebensmittel-Masse auf, welche in einem Winkel geneigt zur Horizontalen, vorzugsweise in Förderrichtung abfallend verläuft. Mit der geneigt zur horizontal verlaufenden Gleitfläche ist ein vereinfachtes Abführen in Richtung einer beispielsweise der erfindungsgemäßen Trennvorrichtung nachgeschalteten Fördereinrichtung ermöglicht. Gemäß einem Ausführungsbeispiel der Erfindung ist die hintere Gegenschneide so zu dem drehbar gelagerten Trennmesser angeordnet, dass die Schneidkante der hinteren Gegenschneide im Abstand zu dem zwischen den Gegenschneiden hindurchführbaren Trennmesser angeordnet. Zwischen der Schneidkante der hinteren Gegenschneide und der in Förderrichtung hinteren Blattseite des Messerblattes ist ein Spalt im Bereich von 0 bis 0,5 mm vorgesehen. Der Abstand der hinteren Gegenschneide zu dem Trennmesser bestimmt das Übermaß des Schneidspaltes zur Messer-Breite des Trennmessers und damit das Gesamt-Spaltmaß zwischen den Gegenschneiden.

In einer anderen Weiterbildung der Erfindung ist eine Antriebseinrichtung vorgesehen, vorzugsweise ein Elektro- oder Fluid-Motor, an der das Trennmesser drehbeweglich angeordnet ist. Mithilfe der Antriebseinrichtung lässt sich auf einfache Weise das Trennmesser um die bevorzugt parallel zur Förderrichtung des Stranges aus pastöser Lebensmittel-Masse ausgerichtete Drehachse bewegen. Vorzugsweise wird mittels der Antriebseinrichtung eine gleichförmige Rotationsbewegung des Trennmessers beziehungsweise eine kontinuierliche Bewegung des Trennmessers mit einer bevorzugt gleichmäßigen Drehzahl umgesetzt. Gemäß einer Ausführungsform der vorliegenden Erfindung wird die Antriebseinrichtung über einen vorbestimmten Drehwinkel mit variierender Geschwindigkeit angetrieben. Bevorzugt bewegt die Antriebseinrichtung das Trennmesser während des Trennvorganges mit erhöhter Geschwindigkeit durch den zu unterteilenden Strang aus pastöser Lebensmittel-Masse. Damit ist insbesondere bei einer kontinuierlich umgesetzten Förderbewegung des Stranges in seiner Förderrichtung eine nahezu senkrechte Schnittfläche auf jeweils beiden Seiten der einzelnen Portionen erzeugt.

Gemäß einer anderen Weiterbildung der erfindungsgemäßen Trennvorrichtung weist das Trennmesser ein im Wesentlichen sichelförmiges Messerblatt, an dem die Schneide ausgebildet ist, und einen Befestigungsabschnitt auf, wobei der Befestigungsabschnitt gegenüber dem sichelförmigen Abschnitt erweitert ist und der wenigstens eine exzentrisch angeordnete Materialausnehmung für eine Verbindung mit der Antriebseinrichtung aufweist. Der Befestigungsabschnitt weist eine etwa kreisförmige Ausgestaltung auf, an dem das gekrümmt ausgebildete Messerblatt mit seiner bevorzugt konkav gekrümmten Schneidkante angeordnet ist. Das der Drehachse des Befestigungsabschnittes zugeordnete proximale Ende der Schneide beziehungsweise des Messerblattes ist vorzugsweise mit der Peripherie des Befestigungsabschnittes gekoppelt, wobei der Verbindungsbereich des Messerblattes eine tangentiale Ausrichtung zur Mitte des Befestigungsabschnittes aufweist. Die Materialausnehmung, insbesondere in Form einer Durchgangsbohrung, ist außermittig am Befestigungsabschnitt des Trennmessers angeordnet. Im Zusammenhang mit dem am Befestigungsabschnitt tangential angeformten Messerblatt entsteht ein Höhenversatz zwischen der Drehachse und der bevorzugt feststehenden Schneidkante der Gegenschneiden. Das hat den Vorteil, dass das Trennmesser einen verringerten Bewegungsraum unterhalb der Gegenschneiden benötigt. Gemäß einer Ausführungsform der Erfindung ist das freie Ende des Trennmessers mittels einer Messerführung geführt, wodurch einem Ausweichen des Trennmessers über seine Länge während des Schneidvorganges entgegengewirkt wird. Die Messerführung ist vorzugsweise als kreisförmige Führungsschiene mit zumindest einer Führungsnut für das darin aufnehmbare distale Ende des Messerblattes ausgebildet.

Gemäß einer anderen Weiterbildung der erfindungsgemäßen Trennvorrichtung ist eine mit der Trennvorrichtung zusammenwirkende Fördereinrichtung zum Fördern des Stranges der Lebensmittel-Masse zur Trennvorrichtung vorgesehen. Mithilfe der Fördereinrichtung, welche der Trennvorrichtung, bezogen auf die Förderrichtung des zu unterteilenden Stranges, der Trennvorrichtung vorgeschaltet ist, lässt sich ein insbesondere kontinuierlich zu fördernder Endlos-Strang auf einfache Weise der erfindungsgemäßen Trennvorrichtung zuführen. Die Fördereinrichtung umfasst zumindest ein umlaufendes Förderelement, wie beispielsweise ein Förderband, wobei insbesondere der Abgabebereich des Förderelementes unmittelbar der vorderen Gegenschneide der Trennvorrichtung zugeordnet ist. Das bedeutet, dass die vordere Gegenschneide unmittelbar hinter dem Abgabebereich des Förderelementes angeordnet ist. In einer Ausführungsform der Erfindung sind die Oberseite des Förderelements und die Gleitfläche der vorderen Gegenschneide etwa in einer Ebene angeordnet.

Die Erfindung betrifft des Weiteren eine Vorrichtung zum Formen und Fördern von Lebensmittel-Produkten aus pastöser Masse mit einer Füllmaschine für die Lebensmittel-Masse, einer an der Füllmaschine angeordneten Formeinrichtung zum Formen von dreidimensionalen Produkten aus der Lebensmittel-Masse, einer der Füllmaschine nachgeschalteten Trennvorrichtung zum Trennen eines Stranges aus pastöser Lebensmittel-Masse nach einer der vorstehend beschriebenen bevorzugten Ausführungsformen, und einer der Trennvorrichtung nachgeschalteten Fördereinrichtung zum Fördern der vereinzelten Portionen.

Der Erfindung liegt die Erkenntnis zugrunde, dass mit einer solch erfindungsgemäßen Vorrichtung das Herstellen von insbesondere dreidimensionalen Produkten aus der Lebensmittel-Masse auf vereinfachte Weise erfolgen kann. Mit der zum Einsatz kommenden Trennvorrichtung lässt sich zum einen der Produktverlust minimieren und zum anderen der konstruktive Aufwand im Bereich der Trennvorrichtung, durch beispielsweise den Wegfall von seitlichen Führungen für den bewegten Strang aus der Lebensmittel-Masse verringern. Die Füllmaschine weist bevorzugt einen Fülltrichter zum Aufnehmen der pastösen Masse und wenigstens eine Förderpumpe zum Fördern der pastösen Masse aus dem Fülltrichter in Richtung der an der Füllmaschine angeordneten Formeinrichtung auf. Um die pastöse Masse zu beispielsweise einem Endlos-Strang zu formen, ist die Formeinrichtung beispielsweise als Wolfeinheit mit einer Wolfscheibe mit einer Vielzahl von die Wolfscheibe durchdringenden Durchbrüchen ausgebildet. Mittels der Wolfeinheit wird beispielsweise ein kontinuierlicher Endlos-Strang aus vielen kleinen Einzelsträngen der pastösen Masse geformt. Der mittels der Formeinrichtung erzeugte Endlos-Strang wird der Trennvorrichtung über eine der Trennvorrichtung vorgeschaltete Fördereinrichtung zugeführt. An der Trennvorrichtung werden die einzelnen Portionen beziehungsweise Strangabschnitte mittels eines bevorzugt rotierenden Trennmessers erzeugt. Der Trennvorrichtung ist weiterhin mindestens eine Fördereinrichtung zum Fördern der vereinzelten Portionen nachgeschaltet, um die vereinzelten Portionen zur Weiterverarbeitung oder zu deren direkter Verpackung abführen zu können. Die Fördereinrichtung zum Abführen der vereinzelten Portionen weist mindestens ein umlaufendes Förderelement, vorzugsweise ein Förderband, auf. Hinsichtlich weiterer bevorzugter Ausgestaltungen der erfindungsgemäßen Vorrichtung zum Herstellen von Lebensmittel-Produkten wird auf die obenstehenden Ausführungen zur erfindungsgemäßen Trennvorrichtung der vorliegenden Erfindung verwiesen.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Ansicht einer erfindungsgemäßen Vorrichtung zum Herstellen von Lebensmittel-Produkten aus pastöser Masse in einer schematischen Darstellung;
- Fig. 2:: eine perspektivische Teilansicht der Vorrichtung nach Fig. 1 mit einer erfindungsgemäßen Trennvorrichtung;
- Fig. 3:: eine Ansicht der erfindungsgemäßen Trennvorrichtung nach Fig. 2;
- Fig. 4:: eine Seitenansicht der erfindungsgemäßen Trennvorrichtung nach Fig. 2; und
- Fig. 5 und 6:: Darstellungen möglicher Ausführungsbeispiele der an der erfindungsgemäßen Trennvorrichtung zum Einsatz kommenden Trennmesser.

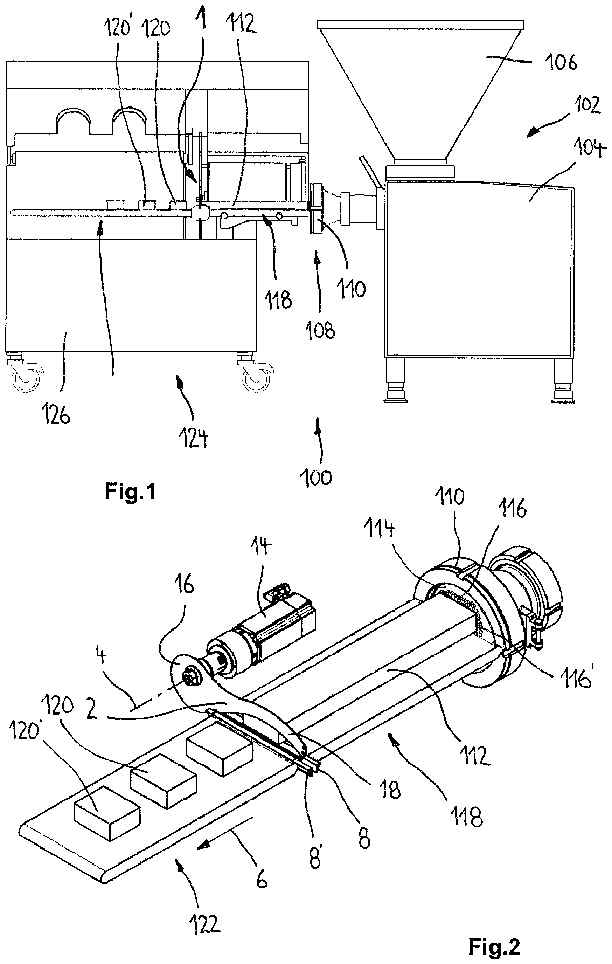

Fig. 1 zeigt eine Vorrichtung 100 zum Formen und Fördern und somit zum Herstellen von Lebensmittel-Produkten aus pastöser Masse. Die Vorrichtung 100 umfasst eine Füllmaschine 102 mit einem Gehäuse 104, an dem ein Fülltrichter 106 zum Aufnehmen von Fleisch- oder Backprodukten angeordnet ist. Innerhalb des Gehäuses 104 ist ferner eine nicht näher dargestellte Förderpumpe angeordnet, mit der die im Fülltrichter 106 befindlichen Produkte zu einer an der Füllmaschine 102 angeordneten Formeinrichtung 108 gefördert wird. Die Formeinrichtung 108 weist ein Formteil 110 zum Ausgeben eines Endlos-Stranges 112 aus der Lebensmittel-Masse auf. Das Formteil 110 weist eine Formscheibe 114 mit einer Vielzahl von Durchtrittsöffnungen 116, 116' (Fig. 2) auf.

Der aus der Formscheibe 114 abgegebene Endlos-Strang 112 wird im Betrieb mittels einer Fördereinrichtung 118 zu einer Trennvorrichtung 1 zum Trennen des Stranges 112 in einzelne Portionen 120, 120' gefördert. Der Trennvorrichtung 1 ist eine Fördereinrichtung 122 nachgeschaltet, mit der die vereinzelten Portionen 120, 120' zur Weiterverarbeitung abgeführt werden. Die Fördereinrichtung 122 ist Teil einer Förder-Maschine 124, welche ein auf Rollen bewegliches Maschinen-Gestell 126 aufweist.

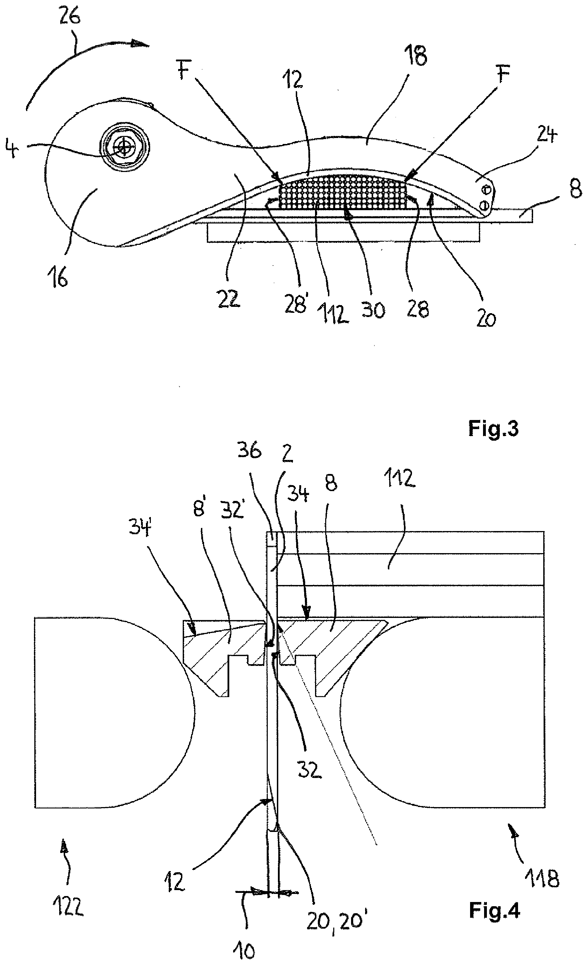

In Fig. 2 ist eine Teilansicht der erfindungsgemäßen Vorrichtung abgebildet, welche insbesondere die Anordnung beziehungsweise den Aufbau der Trennvorrichtung 1 verdeutlichen soll. Der aus dem Formteil 110 ausgegebene Endlos-Strang 112, der mittels der Fördereinrichtung 118 in Richtung der Trennvorrichtung 1 abgeführt wird, wird mittels eines antreibbaren Trennmessers 2 in Portionen 120, 120' vorbestimmter Größe beziehungsweise Länge vereinzelt bzw. unterteilt. Das Trennmesser 2 ist drehbar um eine Drehachse 4 aufgenommen, wobei die Drehachse 4 parallel zur Förderrichtung (Pfeil 6) verläuft. Dem Trennmesser 2 sind zwei feststehende Gegenschneiden 8, 8' zugeordnet, zwischen denen ein Schneidspalt 10 (Fig. 4) ausgebildet ist, durch welchen das Trennmesser 2 zwischen den Gegenschneiden 8, 8' hindurchbewegt wird. Wie aus Fig. 2 ferner ersichtlich, weist das Trennmesser eine Schneide 12 auf, die eine in Längsrichtung des Messers zumindest abschnittsweise konkav gekrümmte Schneidkante 20 (Fig.3) aufweist. Zum Bewegen des Trennmessers 2 um die Drehachse 4 wird eine Antriebseinrichtung 14 eingesetzt, welche als Elektro- oder Fluid-Motor ausgebildet ist. Das Trennmesser 2 weist einen Befestigungsabschnitt 16 für eine Verbindung mit der Antriebseinrichtung auf, an dem ein im Wesentlichen sichelförmiges Messerblatt 18 mit der zumindest abschnittsweise konkav gekrümmten Schneidkante angeordnet ist. Vor und nach der Trennvorrichtung 1 sind jeweils Fördereinrichtungen 118, 122 angeordnet, mit denen die pastöse Lebensmittel-Masse in Form eines Endlos-Stranges der Trennvorrichtung 1 zugeführt und in Form von vereinzelten Portionen 120, 120' von der Trennvorrichtung für die Weiterverarbeitung abgeführt wird.

Fig. 3 zeigt eine Vorderansicht der Trennvorrichtung mit dem Trennmesser 2 und der Gegenschneide 8. Die Gegenschneide 8' ist zur Vereinfachung nicht dargestellt Wie aus Fig. 3 ersichtlich ist das Trennmesser 2 so zu den Gegenschneiden 8, 8' gelagert und bewegt und die im Wesentlichen konkave Schneidkante 20 ist so geformt, dass ein, bezogen auf die Drehachse 4 des Trennmessers 2, proximales Ende 22 und ein distales Ende 24 die Gegenschneiden 8, 8' während des Schneidvorganges im Wesentlichen gleichzeitig passieren. Aufgrund der konkaven Formgebung der Schneidkante 20 des Messerblattes 18 und dessen drehbare Lagerung um die Drehachse 4 bewegen sich während des Trennens zwei beabstandete Schneidbereiche zwischen der Schneide 12 des Trennmessers 2 und den Gegenschneiden 8, 8' aufeinander zu. Das Trennmesser 2 bewegt sich während des Schneidvorganges um die Drehachse 4 in Drehrichtung 26. Wie Fig. 3 weiterhin verdeutlicht, ist durch die konkave Ausgestaltung der Schneidkante 20 bewirkt, dass die Schneidwirkung beider Schneidbereiche an den Seitenkanten 28, 28' des Stranges 112 aus pastöser Lebensmittel-Masse eine Kraftrichtung F in Richtung der Mitte 30 des Endlos-Stranges 112 aufweist.

Fig. 4 ist eine Seitenansicht der Trennvorrichtung 1, mit der der Aufbau beziehungsweise die Anordnung der Gegenschneiden 8, 8' verdeutlicht wird. Die Gegenschneiden 8, 8' sind im Abstand relativ zueinander verstellbar angeordnet. Der Schneidspalt 10 ist somit einstellbar, wobei dieser ein Übermaß zur Breite des durch den Schneidspalt 10 hindurchgeführten Trennmessers 2 im Bereich von 0 bis 0,5 mm aufweist. Die Gegenschneiden 8, 8' weisen einander zugewandte Schneidspalt-Flächen 32, 32' auf. Die Schneidspalt-Flächen 32, 32' verlaufen in einem spitzen Winkel zueinander, wobei der Schneidspalt 10 sich in Bewegungsrichtung des Trennmessers erweitert. Sein engstes Maß weist der Schneidspalt 10 somit an den oberen Enden der Schneidspalt-Flächen 32, 32' auf. Die Gegenschneide 8 ist, bezogen auf die Förderrichtung des Stranges 122, die vordere der Gegenschneiden 8, 8', welche eine im Wesentlichen ebene Gleitfläche 34 für die Lebensmittel-Masse aufweist und welche vorzugsweise parallel zur Horizontalen verläuft. Die vordere Gegenschneide 8 ist im Abstand unveränderlich zu dem rotierenden Trennmesser 2 angeordnet und weist einen Abstand gleich Null zur vorderen Blattseite des Trennmessers 2 auf. Die, bezogen auf die Förderrichtung des Stranges, hintere Gegenschneide 8' weist ebenfalls eine im Wesentlichen ebene Gleitfläche 34' für die Lebensmittel-Masse auf, wobei die Gleitfläche 34' in einem Winkel geneigt zur Gleitfläche der Gegenschneide 8 angeordnet ist. Die Gleitfläche 34 verläuft dabei in Förderrichtung abfallend. Die Gegenschneide 8' ist im Abstand veränderlich zum Trennmesser 2 angeordnet, wobei über die veränderlich anordenbare Gegenschneide 8' das Übermaß vom Schneidspalt 10 zum Breitenmaß des Trennmessers 2 bestimmt wird. In dem vorliegenden Ausführungsbeispiel weist die Gegenschneide 8 zur vorderen Blattseite des Trennmessers 2 einen Abstand von 0 mm auf. Die Gegenschneide 8' weist hingegen zur hinteren Blattseite des Trennmessers einen Abstand von 0 bis 0,5 mm auf, welcher insbesondere im Zusammenhang mit den zu schneidenden Lebensmittel-Massen angepasst wird.

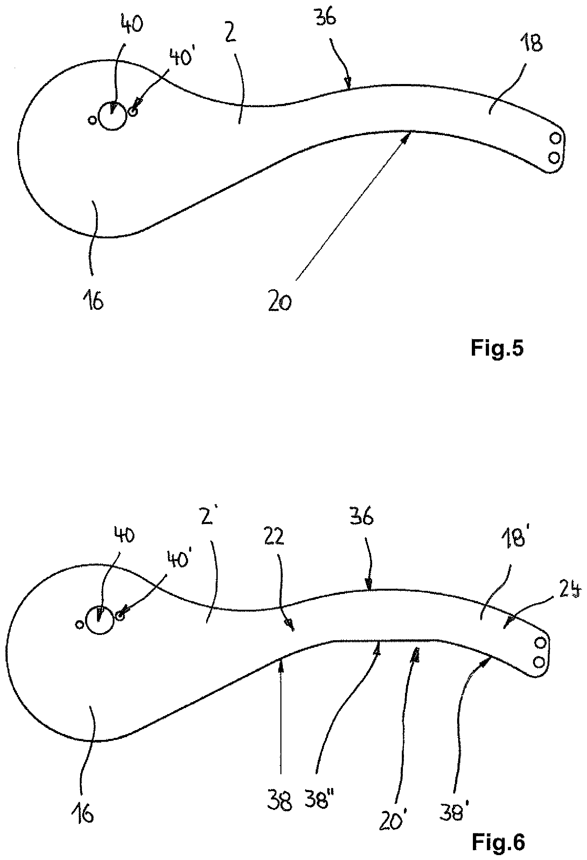

Die Fig. 5 und 6 zeigen zwei mögliche Ausführungsbeispiele von Trennmessern 2, 2'. Beide Trennmesser 2, 2' weisen einen Befestigungsabschnitt 16 und ein sich daran sichelförmig anfügendes Messerblatt 18, 18' auf. Beide Messerblätter 18, 18' weisen jeweils einen konvex geformten Rücken 36 auf und sind an die Peripherie des Befestigungsabschnitts 16 im Wesentlichen tangential angeformt. Das in Fig. 5 gezeigte Messerblatt 18 weist eine Schneide mit einer sich nahezu über ihre Gesamtlänge konkav gekrümmten Schneidkante 20 auf. Im Gegensatz dazu weist die Schneide am Messerblatt 18' eine Schneidkante 20' mit zwei jeweils konkav gekrümmten Schneidkantenabschnitten 38, 38' auf, welche am proximalen Ende 22 und am distalen Ende 24 des Messerblatts 18' angeordnet sind. Die Schneidkantenabschnitte 38, 38' sind durch einen etwa auf der Hälfte der Schneide angeordneten, im Wesentlichen geraden, Schneidkantenabschnitt 38" untereinander verbunden.

Der Befestigungsabschnitt 14 eines jeweiligen Trennmessers 2, 2' weist mehrere Materialausnehmungen 40, 40', vorliegend in Form von Durchgangsbohrungen, auf. Über die Materialausnehmungen 40, 40' sind die Trennmesser 2, 2' drehfest mit einem Aufnahmeabschnitt 42 der Antriebseinrichtung 14 (Fig. 2) verbunden. Die Materialausnehmungen 40, 40' sind exzentrisch zum Mittenbereich des Befestigungsabschnittes angeordnet. Gleiche oder ähnliche Bauteile sind mit denselben Bezugszahlen bezeichnet.

### Bezugszeichenliste

- 1: Trennvorrichtung
- 2, 2': Trennmesser
- 4: Drehachse
- 6: Förderrichtung
- 8, 8': Gegenschneide
- 10: Schneidspalt
- 12: Schneide
- 14: Antriebseinrichtung
- 16: Befestigungsabschnitt
- 18, 18': Messerblatt
- 20, 20': Schneidkante
- 22: proximales Ende
- 24: distales Ende
- 26: Drehrichtung
- 28, 28': Seitenkante
- 30: Mittenachse
- 32, 32': Schneidspalt-Fläche
- 34, 34': Gleitfläche
- 36: Rücken
- 38, 38', 38": Schneidkantenabschnitt
- 40, 40': Materialausnehmung
- 42: Aufnahmeabschnitt
- 100: Vorrichtung
- 102: Füllmaschine
- 104: Gehäuse
- 106: Fülltrichter
- 108: Formeinrichtung
- 110: Formteil
- 112: Endlos-Strang
- 114: Formscheibe
- 116, 116': Durchtrittsöffnung
- 118: Fördereinrichtung
- 120, 120': Portion
- 122: Fördereinrichtung
- 124: Förder-Maschine
- 126: Maschinen-Gestell
- F: Kraftrichtung

## Patentansprüche

1. Trennvorrichtung (1) zum Trennen eines Stranges aus pastöser Lebensmittel-Masse, insbesondere aus Fleisch oder Teigen, in einzelne Portionen, mit
- einem bewegbaren und antreibbaren Trennmesser (2, 2') mit einer Schneide (12), wobei die Schneide (12) des Trennmessers (2, 2') eine in Längsrichtung des Trennmessers zumindest abschnittsweise konkav gekrümmte Schneidkante (20, 20') aufweist, und
- mindestens einer dem Trennmesser (2, 2') zugeordneten, vorzugsweise feststehenden Gegenschneide (8, 8'),
**dadurch gekennzeichnet;**
**dass** die Schneide (12) ein, bezogen auf den Lagerpunkt des Trennmessers (2, 2'), proximales Ende (22) und distales Ende (24) und mindestens einen zwischen den Enden (22, 24) konkav gekrümmten Schneidkantenabschnitt (38, 38') aufweist, wobei das Trennmesser so zur Gegenschneide (8, 8') gelagert und bewegbar ist, dass beide Enden (22, 24) der Schneide (12) während des Trennvorgangs die Gegenschneide (8, 8') im Wesentlichen gleichzeitig passieren.

2. Trennvorrichtung nach Anspruch 1,
**dadurch gekennzeichnet, dass** die Schneidkante (20) des Trennmessers (2) über nahezu ihre Gesamtlänge konkav gekrümmt ist.

3. Trennvorrichtung nach Anspruch 1,
**dadurch gekennzeichnet, dass** die Schneidkante (20') mindestens zwei konkav gekrümmte Schneidkantenabschnitte (38, 38') aufweist, welche durch einen im Wesentlichen geraden Schneidkantenabschnitt (38") verbunden sind.

4. Trennvorrichtung nach mindestens einem der Ansprüche 1 bis 3,
**dadurch gekennzeichnet, dass** das Trennmesser (2, 2') um eine Drehachse (4) drehbar gelagert ist und die im Wesentlichen konkave Schneidkante (20, 20') des Trennmessers (2, 2') so geformt ist, dass während des Trennens sich zwei zwischen der Schneide (12) des Trennmessers (2, 2') und Gegenschneide (8, 8') ausbildende beabstandete Schneidbereiche aufeinander zu bewegen.

5. Trennvorrichtung nach mindestens einem der Ansprüche 1 bis 4, **gekennzeichnet durch** zwei Gegenschneiden (8, 8'), welche im Abstand relativ zueinander verstellbar angeordnet und eingerichtet sind, einen Schneidspalt (10) für das zwischen die Gegenschneiden (8, 8') hindurchführbare Trennmesser (2, 2') auszubilden.

6. Trennvorrichtung nach Anspruch 5,
**dadurch gekennzeichnet, dass** die den Schneidspalt (10) begrenzenden Gegenschneiden (8, 8') einander zugewandte Schneidspalt-Flächen (32, 32') aufweisen, welche in einem spitzen Winkel zueinander verlaufen, wobei der Schneidspalt (10) sich in Bewegungsrichtung des Trennmessers (2, 2') erweitert.

7. Trennvorrichtung nach mindestens einem der Ansprüche 5 und 6,
**dadurch gekennzeichnet, dass** der Schneidspalt (10) zwischen den Gegenschneiden (8, 8') ein Übermaß zur Breite des Trennmessers (2, 2') im Bereich von 0 bis 0,5 mm aufweist.

8. Trennvorrichtung nach mindestens einem der Ansprüche 5 bis 7,
**dadurch gekennzeichnet, dass** die, bezogen auf die Förderrichtung (6) des Stranges (112), vordere Gegenschneide (8) eine im Wesentlichen ebene Gleitfläche (34) für die Lebensmittel-Masse aufweist, welche vorzugsweise parallel oder schräg zur einer Horizontalen verläuft.

9. Trennvorrichtung nach mindestens einem der Ansprüche 5 bis 8,
**dadurch gekennzeichnet, dass** die, bezogen auf die Förderrichtung (6) des Stranges (112), hintere Gegenschneide (8') eine im Wesentlichen ebene Gleitfläche (34') für die Lebensmittel-Masse aufweist, welche in einem Winkel geneigt zur Horizontalen, vorzugsweise in Förderrichtung (6) abfallend verläuft.

10. Trennvorrichtung nach mindestens einem der Ansprüche 1 bis 9,
**gekennzeichnet durch** eine Antriebseinrichtung (14), vorzugsweise einen Elektro- oder Fluid-Motor, an der das Trennmesser (2, 2') drehbeweglich angeordnet ist.

11. Trennvorrichtung nach mindestens einem der Ansprüche 1 bis 10,
**dadurch gekennzeichnet, dass** das Trennmesser (2, 2') ein im wesentlichen sichelförmiges Messerblatt (18,18'), an dem die Schneide (12) ausgebildet ist, und einen Befestigungsabschnitt (16) aufweist, der gegenüber dem sichelförmigen Abschnitt erweitert ist und an dem wenigstens eine exzentrisch angeordnete Materialausnehmung (40, 40'), insbesondere Bohrung, für eine Verbindung mit der Antriebseinrichtung (14') ausgebildet ist.

12. Trennvorrichtung nach mindestens einem der Ansprüche 1 bis 11, **gekennzeichnet durch** eine mit der Trennvorrichtung (1) zusammenwirkende Fördereinrichtung (118) zum Fördern eines Endlos-Stranges (112) der Lebensmittel-Masse zur Trennvorrichtung (1).

13. Vorrichtung zum Formen und Fördern von Lebensmittel-Produkten aus pastöser Masse, mit
- einer Füllmaschine (102) für die Lebensmittel-Masse,
- einer an der Füllmaschine (102) angeordneten Formeinrichtung (108) zum Formen von dreidimensionalen Produkten aus der Lebensmittel-Masse, und
- einer der Füllmaschine (102) nachgeschalteten Trennvorrichtung (1) zum Trennen eines Stranges (112) aus pastöser Lebensmittel-Masse nach mindestens einem der Ansprüche 1 bis 12, und
- einer der Trennvorrichtung (1) nachgeschalteten Fördereinrichtung (122) zum Fördern der vereinzelten Portionen (120, 120').

## Claims

1. A severing apparatus (1) for severing a string of pasty foodstuff material, in particular of meat or doughs, into individual portions, comprising
- a movable and drivable severing knife (2, 2') having a knife edge (12), wherein the knife edge (12) of the severing knife (2, 2') has a cutting edge (20, 20') which is at least portion-wise concavely curved in the longitudinal direction of the severing knife
- at least one preferably stationary shear bar (8, 8') associated with the severing knife (2, 2'),
**characterised in that** the knife edge (12) has a proximal end (22) in relation to the mounting point of the severing knife (2, 2') and a distal end (24), and at least one cutting edge portion (38, 38') concavely curved between the ends (22, 24), wherein the severing knife is so mounted and movable relative to the shear bar (8, 8') that both ends (22, 24) of the knife edge (12) substantially simultaneously pass the shear bar (8, 8') during the severing operation.

2. A severing apparatus according to claim 1 **characterised in that** the cutting edge (20) of the severing knife (2) is concavely curved over almost its entire length.

3. A severing apparatus according to claim 1 **characterised in that** the cutting edge (20') has at least two concavely curved cutting edge portions (38, 38') connected by a substantially straight cutting edge portion (38").

4. A severing apparatus according to at least one of claims 1 to 3 **characterised in that** the severing knife (2, 2') is mounted rotatably about an axis of rotation (4) and the substantially concave cutting edge (20, 20') of the severing knife (2, 2') is so shaped that during the severing operation two spaced cutting regions which are provided between the knife edge (12) of the severing knife (2, 2') and the shear bar (8, 8') move towards each other.

5. A severing apparatus according to at least one of claims 1 to 4 **characterised by** two shear bars (8, 8') which are arranged adjustably in spacing relative to each other and are adapted to form a cutting gap (10) for the severing knife (2, 2') which can be passed through between the shear bars (8, 8').

6. A severing apparatus according to claim 5 **characterised in that** the shear bars (8, 8') delimiting the cutting gap (10) have mutually facing cutting gap surfaces (32, 32') which extend at an acute angle relative to each other, the cutting gap (10) enlarging in the direction of movement of the severing knife (2, 2').

7. A severing apparatus according to at least one of claims 5 and 6 **characterised in that** the cutting gap (10) between the shear bars (8, 8') has an oversize in relation to the width of the cutting knife (2, 2') in the region of between 0 and 0.5 mm.

8. A severing apparatus according to at least one of claims 5 to 7 **characterised in that** the shear bar (8) which is the front bar in relation to the conveyor direction (6) of the string (112) has a substantially flat sliding surface (34) for the foodstuff material, which preferably extends parallel or inclinedly relative to a horizontal.

9. A severing apparatus according to at least one of claims 5 to 8 **characterised in that** the shear bar (8') which is the rear bar in relation to the conveyor direction (6) of the string (112) has a substantially flat sliding surface (34') for the foodstuff material, which preferably extends at an angle inclinedly relative to the horizontal, preferably falling away in the conveyor direction (6).

10. A severing apparatus according to at least one of claims 1 to 9 **characterised by** a drive device (14), preferably an electric or fluid motor, at which the severing knife (2, 2') is rotatably movably arranged.

11. A severing apparatus according to at least one of claims 1 to 10 **characterised in that** the severing knife (2, 2') has a substantially sickle-shaped knife blade (18, 18') on which the knife edge (12) is provided and a fixing portion (16) which is enlarged in relation to the sickle-shaped portion and at which at least one eccentrically arranged material opening (40, 40'), in particular a bore, is provided for making a connection to the drive device (14').

12. A severing apparatus according to at least one of claims 1 to 11 **characterised by** a conveyor device (118) co-operating with the severing apparatus (1) for conveying an endless string (112) of the foodstuff material to the severing apparatus (1).

13. Apparatus for shaping and conveying foodstuff products of pasty material, comprising
- a filling machine (102) for the foodstuff material,
- a shaping device (108) arranged on the filling machine (102) for shaping three-dimensional products from the foodstuff material, and
- a severing apparatus (1) disposed downstream of the filling machine (102) for severing a string (112) of pasty foodstuff material according to at least one of claims 1 to 12, and
- a conveyor device (122) disposed downstream of the severing apparatus (1) for conveying the separated portions (120, 120').

## Revendications

1. Dispositif de séparation (1) servant à séparer en portions individuelles un boyau composé d'une masse de produit alimentaire pâteuse, en particulier composé de viande ou de pâtes, avec
- un couteau de séparation (2, 2'), pouvant être déplacé et entraîné, avec un tranchant (12), dans lequel le tranchant (12) du couteau de séparation (2, 2') présente une arête coupante (20, 20') incurvée au moins par endroits de manière concave dans le sens de la longueur du couteau de séparation, et
- au moins un contre-tranchant (8, 8') associé au couteau de séparation (2, 2'), de préférence fixe,
**caractérisé en ce ;**
**que** le tranchant (12) présente une extrémité proximale (22) et une extrémité distale (24) par rapport au point de palier du couteau de séparation (2, 2') et au moins une section d'arête coupante (38, 38') incurvée de manière concave entre les extrémités (22, 24), dans lequel le couteau de séparation est monté et peut être déplacé de telle sorte, par rapport au contre-tranchant (8, 8'), que les deux extrémités (22, 24) du tranchant (12) traversent sensiblement de manière simultanée, au cours de l'opération de séparation, le contre-tranchant (8, 8').

2. Dispositif de séparation selon la revendication 1, **caractérisé en ce que** l'arête coupante (20) du couteau de séparation (2) est incurvée de manière concave sur quasiment toute sa longueur.

3. Dispositif de séparation selon la revendication 1,
**caractérisé en ce que** l'arête coupante (20') présente au moins deux sections d'arête coupante (38, 38') incurvées de manière concave, lesquelles sont reliées par une section d'arête coupante (38") sensiblement rectiligne.

4. Dispositif de séparation selon au moins l'une quelconque des revendications 1 à 3,
**caractérisé en ce que** le couteau de séparation (2, 2') est monté de manière à pouvoir tourner autour d'un axe de rotation (4) et l'arête coupante (20, 20') sensiblement concave du couteau de séparation (2, 2') est formée de telle sorte que, au cours de la séparation, deux zones coupantes espacées se formant entre le tranchant (12) du couteau de séparation (2, 2') et le contre-tranchant (8, 8') se déplacent l'une vers l'autre.

5. Dispositif de séparation selon au moins l'une quelconque des revendications 1 à 4,
**caractérisé par** deux contre-tranchants (8, 8'), qui sont disposés à distance de manière à pouvoir être ajustés l'un par rapport à l'autre afin de réaliser une fente coupante (10) pour le couteau de séparation (2, 2') pouvant être guidée tout au long entre les contre-tranchants (8, 8').

6. Dispositif de séparation selon la revendication 5,
**caractérisé en ce que** les contre-tranchants (8, 8') délimitant la fente de coupe (10) présentent des surfaces de fente de coupe (32, 32') tournées les unes vers les autres, lesquelles s'étendent les unes par rapport aux autres selon un angle aigu, dans lequel la fente de coupe (10) s'élargit dans le sens de déplacement du couteau de séparation (2, 2').

7. Dispositif de séparation selon au moins l'une quelconque des revendications 5 et 6,
**caractérisé en ce que** la fente de coupe (10) présente, entre les contre-tranchants (8, 8'), une surdimension par rapport à la largeur du couteau de séparation (2, 2') dans la plage de 0 à 0,5 mm.

8. Dispositif de séparation selon au moins l'une quelconque des revendications 5 à 7,
**caractérisé en ce que** le contre-tranchant (8) avant par rapport au sens de transport (6) du boyau (112) présente une surface de glissement (34) sensiblement plane pour la masse de produit alimentaire, qui s'étend de préférence de manière parallèle ou inclinée par rapport à une horizontale.

9. Dispositif de séparation selon au moins l'une quelconque des revendications 5 à 8,
**caractérisé en ce que** le contre-tranchant (8') arrière par rapport au sens de transport (6) du boyau (112) présente une surface de glissement (34') sensiblement plane pour la masse de produit alimentaire, laquelle s'étend de manière inclinée selon un angle par rapport à l'horizontale, de préférence de manière descendante dans le sens de transport (6).

10. Dispositif de séparation selon au moins l'une quelconque des revendications 1 à 9,
**caractérisé par** un système d'entraînement (14), de préférence un moteur électrique ou un moteur à fluide, au niveau duquel le couteau de séparation (2, 2') est disposé de manière mobile en rotation.

11. Dispositif de séparation selon au moins l'une quelconque des revendications 1 à 10,
**caractérisé en ce que** le couteau de séparation (2, 2') présente une lame de couteau (18, 18') sensiblement en forme de croissant, au niveau de laquelle le tranchant (12) est réalisé, et une section de fixation (16), qui est élargie par rapport à la section en forme de croissant et au niveau de laquelle au moins un évidement de matériau (40, 40') disposé de manière excentrique, en particulier un alésage, est réalisé pour une liaison avec le système d'entraînement (14').

12. Dispositif de séparation selon au moins l'une quelconque des revendications 1 à 11,
**caractérisé par** un système de transport (118) coopérant avec le dispositif de séparation (1) servant à transporter un boudin sans fin (112) de la masse de produit alimentaire au dispositif de séparation (1).

13. Dispositif servant à mouler et à transporter des produits alimentaires composés d'une masse pâteuse, avec
- une machine de remplissage (102) pour la masse de produit alimentaire,
- un système de moulage (108), disposé au niveau de la machine de remplissage (102), servant à mouler des produits tridimensionnels à partir de la masse de produit alimentaire, et
- un dispositif de séparation (1), installé en aval de la machine de remplissage (102), servant à séparer un boyau (112) de la masse de produit alimentaire pâteuse selon au moins l'une quelconque des revendications 1 à 12, et
- un système de transport (122), installé en aval du dispositif de séparation (1), servant à transporter des portions (120, 120') isolées.
